# EUROPÄISCHE PATENTANMELDUNG

(11) **EP 2 030 753 A1**
(43) Veröffentlichungstag der Anmeldung: **04.03.2009**
(21) Anmeldenummer: 08021239.2
(22) Anmeldetag: 22.09.2004
(51) Int. Cl.: B29C 39/12, B62D 29/04

(54) **Mehrschichtige Kunststoffwand für einen Aufbau eines Kraftfahrzeugs**

(30) Priorität: 03.11.2003 DE 10351181
(62) Teilanmeldung aus: 04022512.0
(71) Anmelder: Dr.Ing. H.C. F. Porsche Aktiengesellschaft, 70435 Stuttgart (DE)
(72) Erfinder: Schwan, Norbert, 71277 Rutesheim (DE); Erb, Thiemo Adolf, 70182 Stuttgart (DE)

(57) **Zusammenfassung**

Diese Wand eignet sich für einen Aufbau eines Kraftfahrzeugs, insbesondere Personenkraftwagens, die durch ein mehrere Schichten aus Kunststoff umfassendes Laminat gebildet wird.

Um diese Wand hinsichtlich sichtbarer Oberfläche zu optimieren, weist sie folgenden Schichtaufbau auf:
- eine erste äußere durch einen Harzfilm gebildete Schicht (6),
- eine zweite an die erste angrenzende durch ein Vlies gebildete Schicht (7),
- eine dritte an die zweite Schicht angrenzende eine oder mehrere unidirektionale Lagen aufweisende Schicht (8).

## Beschreibung

Die Erfindung betrifft eine Wand für einen Aufbau eines Kraftfahrzeugs, insbesondere Personenkraftwagens, die durch ein mehrere Schichten aus Kunststoff umfassendes Laminat gebildet wird.

Es ist ein Verbundbauteil für eine Fahrzeugkarosserie mit einer faserfreien Außenhaut und einer faserverstärkten Trägerstruktur bekannt, DE 102 02 911 C2, die an einer Innenseite dieser Außenhaut aufgebracht ist, um besagte Außenhaut zu verstärken. Dabei ist in dem Bereich an der Grenzfläche und der Trägerstruktur eine Grenzschicht ausgebildet. Innerhalb der Grenzschicht ist der Faseranteil bezüglich des außerhalb der Grenzschicht liegenden Bereichs der Trägerstruktur erhöht. Mit dieser Lösung wird angestrebt, dass Temperaturänderungen weitgehend keinen Einfluss auf die Qualität der Oberfläche haben.

In der DE 101 20 912 A1 wird ein Verbundbauteil für eine Karosserie behandelt, das eine Schicht mit einer lackierfähigen Oberfläche aus kurzfaserverstärktem Polyurethan und einer weiteren Schicht aus langfaserverstärktem Polyurethan aufweist. Dieser Schichtaufbau soll zur Qualitätsoptimierung der lackierten Oberfläche beitragen.

Aufgabe der Erfindung ist es, durch eine gezielte Kombination und Ausbildung von Schichten aus Kunststoff eine Wand für einen Aufbau eines Personenkraftwagens zu schaffen, die sich durch eine hohen Qualitätsstand für die zu lackierende Oberfläche auszeichnet.

Erfindungsgemäß wird diese Aufgabe durch die Merkmale des Patentanspruchs gelöst. Weitere, die Erfindung ausgestaltende Merkmale sind in den Unteransprüchen enthalten.

Die mit der Erfindung hauptsächlich erzielten Vorteile sind darin zu sehen, dass die Zusammensetzung der Schichten der bei dem Aufbau des Personenkraftwagens verbauten Wand, insbesondere der Einsatz der zweiten Schicht, die als Vlies ausgebildet ist und der dritten Schicht, die ein oder mehrere unidirektionale Lagen umfasst, dazu beiträgt, dass die durch das Gewebe erzeugten Oberflächenabzeichnungen, die durch Temperatur und Feuchtigkeit - Relativbewegung Harz zur Matrix - entstehen, vermieden werden. Dadurch ist an der äußeren Schicht der Wand d.h. an ihre lackierfähigen Außenseite eine Class - A Oberfläche realisierbar, die bei visueller Betrachtung hochwertig erscheint. Bei der Beurteilung der Hochwertigkeit werden vor allem Lang- und Kurzwelligkeit, Fehlstellen und/oder Glanzgrad berücksichtigt. Es ist auch eine Zusammensetzung von Schichten für eine Wand möglich, bei der die zweite Schicht die Außenseite bildet. Die Schichten sind im Handel verfügbar und können im vorimprägnierten Zustand - sogenannte Prepregs - in ein Werkzeug bspw. einen Autoklav eingebracht werden. Als Varianten sind denkbar das Vlies trocken - nicht imprägniert - zu lassen, so dass es von den angrenzenden Schichten mitimprägniert wird bzw. es mit besagten angrenzenden Schichten durch Kleben, Nähen oder dgl. zu verbinden. Möglich ist aber auch die Schichten im Trockenzustand oder nicht imprägniert in das Werkzeug einzusetzen und dann mittels Harz- Injektionsverfahren zu beaufschlagen.

In der Zeichnung wird ein Ausführungsbeispiel der Erfindung gezeigt, das nachstehend näher erläutert wird.

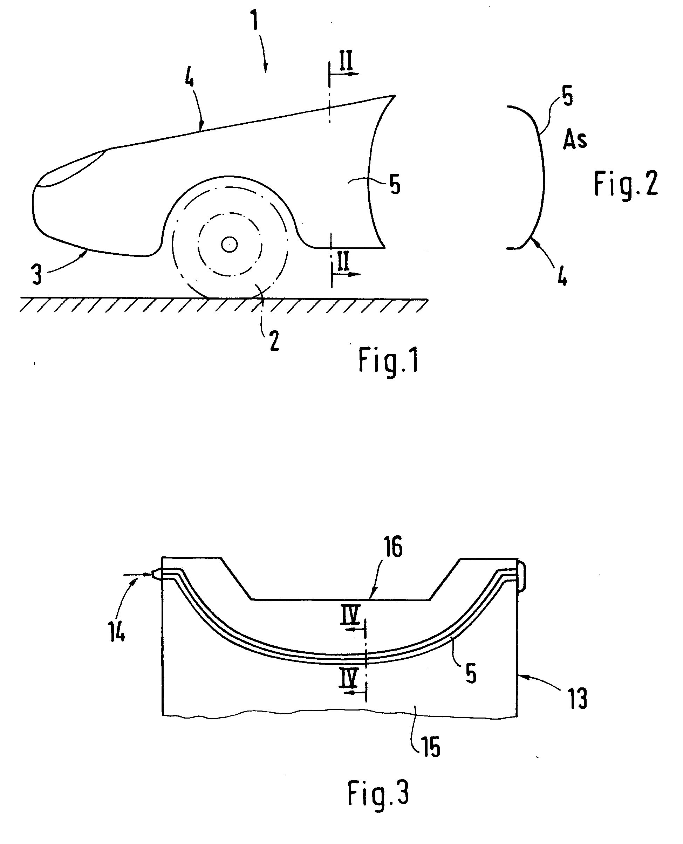

Es zeigen
- Fig. 1: eine Teilseitenansicht eines Aufbaus eines Personenkraftwagens im Bereich eines Frontseitenteils mit einer Wand nach der Erfindung,
- Fig. 2: einen Schnitt nach der Linie II - 11 der Fig.1,
- Fig. 3: eine Ansicht entsprechend Fig. 2, jedoch um 90° gedreht und einem schematisch dargestellten Werkzeug zur Herstellung des Frontendteils und

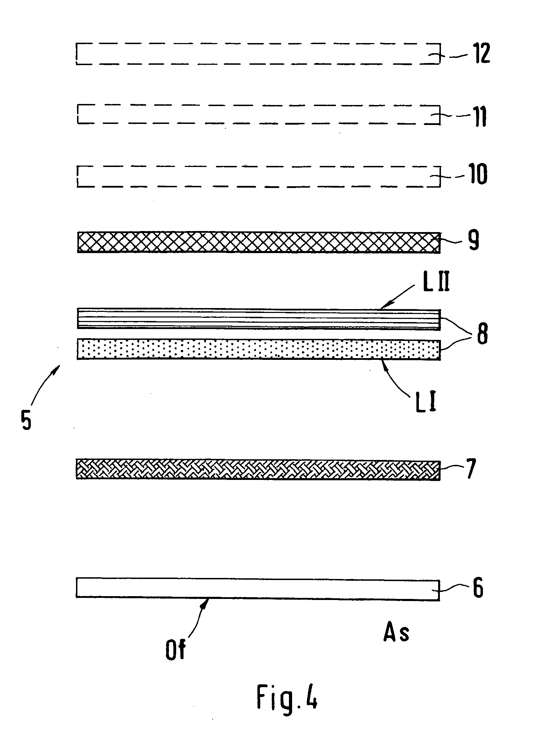

- Fig. 4: einen Schnitt nach der Linie IV-IV der Fig. 3 mit einem schematisch dargestellten Schichtaufbau der Wand nach Fig. 1.

Von einem Personenkraftwagen 1, der einen von Rädern 2 getragenen Aufbau 3 umfasst, ist lediglich ein Frontseitenteil 4 in Gestalt eines vorderen linken Kotflügels dargestellt. Das Frontseitenteil 4 erstreckt sich in Längsrichtung A-A des Personenkraftwagens 1 gesehen bspw. von einer Windschutzscheibe bis zu einem Bugteil, und es weist eine Wand 5 auf, die aus einem Kunststoff der Gattung Verbundwerkstoff CFK besteht. Die Wand 5 besitzt eine von einer Außenseite As des Personenkraftwagens 1 aus sichtbare Oberfläche Of, die lackiert ist und mit einer hochwertigen Oberflächengüte - Class-A Oberfläche - versehen ist.

Hierzu wird die Wand 5 durch ein Laminat gebildet, das einen Schichtaufbau mit mehreren Schichten umfasst. Eine erste äußere Schicht 6 mit der Oberfläche Of wird durch eine Oberflächenfilm mit einer bspw. gering verstärkten Harzschicht gebildet, der aus Glasfaser GF, Kohlefaser CF oder anderen geeigneten Verstärkungsfasern besteht. An die erste Schicht 6 grenzt eine zweite Schicht 7 ohne strukturelle Funktion an, die durch ein Vlies dargestellt ist. Hierfür eignen sich Glasfaser GF, Kohlefaser CF, Polyacrylinitril, Mesophasenpech und Polyester PES. Eine dritte Schicht 8 mit struktureller Funktion ist an die zweite Schicht 7 herangeführt und umfasst beispielsweise zwei Lagen mit unidirektionaler Orientierung - 0° und 90° orientiert - , die aus Kohlefaser CF oder Glasfaser GF bestehen. Mit der dritten Schicht 8 verbunden ist eine vierte Schicht 9, die eine strukturelle Basis darstellt und als unidirektionales Gewebe aus Kohlefaser CF oder Glasfaser GF ausgebildet Ist. Denkbar ist aber auch, dass diese Schicht einen SandwichAufbau oder einem Kernverbund aufweist.

Die das Vlies bildende Schicht 7 ist mit wenigstens einer angrenzenden bspw. der ersten Schicht 6 durch Kleben oder mechanisches Fügen, wie Nähen verbunden ist. Möglich ist darüber hinaus, die durch das Vlies gebildete Schicht 7 als ein vorimprägniertes Bauteil auszubilden, das, weil haftfähig, an einer der angrenzenden Schichten 6 oder 8 gehalten wird.

Im Ausführungsbeispiel kann auf die vierte Schicht 9 eine fünfte Schicht 10, gegebenenfalls auch noch eine sechste Schicht 11 und eine siebte Schicht 12 aus Gewebe aufgetragen werden.

Bei dem Verfahren zur Herstellung der Wand 5 werden beispielsweise die Schichten 8 und 9 in Form von vorimprägnierten Bauteilen in das Fertigungsverfahren bzw. in ein schematisch angedeutetes Werkzeug 13 eingebracht. Gegebenenfalls können auch noch weitere Schichten in diesem Zustand eingebracht. Dabei ist es aber auch möglich, dass wenigstens eine der Schichten unimprägniert in das Werkzeug 13 eingebracht wird und mittels einer nächsten anliegenden imprägnierten Schicht mitimprägniert wird.

Allerdings bietet sich auch an, dass die Wand 5 bildenden Schichten in nicht imprägniertem Zustand, also trocken im Werkzeug 13 zusammengesetzt werden und mittels eines Injektionsverfahrens mit Harz getränkt werden. Dieses Harz wird bei 14 in das Werkzeug 13, das ein Unterteil 15 und ein Oberteil 16 umfasst, eingebracht.

Schließlich kann die Oberfläche der Wand 4 dadurch verbessert werden, dass an die Außenseite As der ersten Schicht 6 ein Sprühfilm - Gel Coat - aufgebracht wird.

## Patentansprüche

1. Wand für einen Aufbau eines Kraftfahrzeugs, insbesondere Personenkraftwagens, die durch ein mehrere Schichten aus Kunststoff umfassendes Laminat gebildet wird, **dadurch gekennzeichnet, dass** die Wand folgenden Schichtaufbau aufweist
- eine erste äußere durch einen Harzfilm gebildete Schicht (6),
- eine zweite an die erste Schicht (6) angrenzende durch ein Vlies gebildete Schicht (7),
- eine dritte an die zweite Schicht (7) angrenzende eine oder mehrere unidirektionale Lagen aufweisende Schicht (8).

2. Wand nach Anspruch 1, **dadurch gekennzeichnet, dass** an die dritte Schicht (8) eine vierte Schicht (9) angrenzt, die durch ein unidirektionales Gewebe gebildet wird.

3. Wand nach Anspruch 2, **dadurch gekennzeichnet, dass** auf die vierte Schicht (9) eine fünfte, gegebenenfalls auch noch eine sechste Schicht (11) und eine siebte Schicht (12) aus Gewebe aufgetragen ist.

4. Wand nach Anspruch 1, **dadurch gekennzeichnet, dass** die durch das Vlies gebildete zweite Schicht (7) mit wenigstens einer der angrenzenden Schichten (6 oder 8) verklebt ist.

5. Wand nach Anspruch 1, **dadurch gekennzeichnet, dass** die durch das Vlies gebildete zweite Schicht (7) mit wenigstens einer der angrenzenden Schichten (6 oder 8) mechanisch bspw. durch Nähen verbunden ist.

6. Wand nach Anspruch 1, **dadurch gekennzeichnet, dass** die durch das Vlies gebildete zweite Schicht (7) als ein vorimprägniertes Bauteil ausgebildet ist.

7. Wand für einen Aufbau eines Kraftfahrzeugs, insbesondere Personenkraftwagens, die durch ein oder mehrere Schichten aus Kunststoff umfassendes Laminat gebildet wird, **dadurch gekennzeichnet, dass** die Wand folgenden Schichtaufbau aufweist:
- eine äußere Schicht (7) wird durch ein Vlies gebildet,
- eine weitere an die äußere Schicht (7) angrenzende Schicht (8) mit einer oder mehreren unidirektionalen Lagen.

8. Verfahren zur Herstellung der Wand nach einem oder mehreren der vorangehenden Ansprüche, **dadurch gekennzeichnet, dass** zumindest die erste Schicht (6) und die zweite Schicht (7) in Form von vorimprägnierten Bauteilen in das Fertigungsverfahren eingebracht werden.

9. Verfahren nach Anspruch 8, **dadurch gekennzeichnet, dass** noch weitere Schichten in Form von vorimprägnierten Bauteilen in das Fertigungsverfahren eingebracht werden.

10. Verfahren nach einem oder mehreren der vorangehenden Ansprüche, **dadurch gekennzeichnet, dass** wenigstens eine Schicht durch die nächst anliegende imprägniert wird.

11. Verfahren nach einem oder mehreren der vorgehenden Ansprüche, **dadurch gekennzeichnet, dass** ein Teil der Schichten (8 bis 12) vorimprägniert sind und die äußere Schicht (7) beispielsweise von diesen Schichten mit imprägniert wird.

12. Verfahren nach einem oder mehreren der vorangehenden Ansprüche, **dadurch gekennzeichnet, dass** die Schichten (bspw. 6, 7, 8 und 9) für die Wand (5) in nicht imprägniertem Zustand zusammengesetzt und mittels einem Injektionsverfahren mit Harz getränkt werden.

13. Verfahren nach einem oder mehreren der vorangehenden Ansprüche, **dadurch gekennzeichnet, dass** auf die Außenseite (As) der äußeren Schicht ein Sprühfilm aufgebracht wird.
